# EUROPEAN PATENT SPECIFICATION

(11) **EP 2 834 753 B1**
(45) Date of publication and mention of the grant of the patent: **18.01.2017**
(21) Application number: 13772383.9
(22) Date of filing: 04.04.2013
(51) Int. Cl.: H04W 28/02, H04L 12/805, H04L 12/823, H04L 12/851

(54) **SYSTEMS AND METHODS FOR SELECTIVE DATA REDUNDANCY ELIMINATION FOR RESOURCE CONSTRAINED HOSTS**
SYSTEME UND VERFAHREN ZUR SELEKTIVEN DATENREDUNDANZBESEITIGUNG FÜR HOSTS MIT EINGESCHRÄNKTEN RESSOURCEN
SYSTÈMES ET PROCÉDÉS DE SUPPRESSION SÉLECTIVE DE REDONDANCES DE DONNÉES (SDRE) POUR DES HÔTES À RESSOURCES LIMITÉES

(30) Priority: 04.04.2012 US 201261620065 P
(43) Date of publication of application: 11.02.2015
(73) Proprietor: Huawei Technologies Co., Ltd., Longgang District Shenzhen, Guangdong 518129 (CN)
(72) Inventor: ZHANG, Yan, Harrison, New Jersey 07029 (US); ANSARI, Nirwan Ansari, Montville, New Jersey 07045 (US); WU, Mingquan, Princeton Junction, New Jersey 08550 (US); YU, Hong Heather, West Windsor, New Jersey 08550 (US)
(74) Representative: Thun, Clemens
(86) International application number: PCT/US2013/035325
(87) International publication number: WO 2013/152229

(56) References cited:
- US-A1- 2007 195 815
- US-A1- 2009 228 599
- US-A1- 2011 134 909
- US-A1- 2011 176 556
- US-A1- 2011 184 908
- US-A1- 2011 242 979
- US-A1- 2011 292 924
- US-B1- 7 814 284
- SUMANTA SAHA: "On reducing the processing load of Redundancy Elimination algorithms", GLOBECOM WORKSHOPS (GC WKSHPS), 2011 IEEE, IEEE, 5 December 2011 (2011-12-05), pages 1106-1110, XP032124496, DOI: 10.1109/GLOCOMW.2011.6162349 ISBN: 978-1-4673-0039-1

## Description

### TECHNICAL FIELD

The present invention relates to a system and method for data redundancy elimination, and, in particular embodiments, to a system and method for selective data redundancy elimination for resource constrained hosts.

### BACKGROUND

Today's information technology (IT) organizations tend to deploy their infrastructures geographically over a wide area network (WAN) to increase productivity, support global collaboration, and minimize costs, thus constituting today's WAN-centered environments. As compared to a local area network (LAN), a WAN generally is a telecommunication network that covers a broad area; a WAN may connect across metropolitan, regional, and/or national boundaries. Traditional LAN-oriented infrastructures are insufficient to support global collaboration with high application performance at low cost. Deploying applications over WANs generally incurs performance degradation owing to the intrinsic nature of WANs such as high latency and high packet loss rate. Many factors not normally encountered in LANs can quickly lead to performance degradation of applications that are run across a WAN.

The need for increasing speed over WANs spurs on application performance improvement over WANs. WAN optimization, also commonly referred to as WAN acceleration, generally describes enhancing application performance over WANs. WAN acceleration aims to provide high-performance access to remote data such as files and videos. A variety of WAN acceleration techniques have been proposed. Some focus on maximizing bandwidth utilization, others address latency, and still others address protocol inefficiency, which hinders the effective delivery of packets across the WAN. Data compression reduces the amount of bandwidth consumed on a link during transfer across the WAN, and it also can reduce the transit time for specific data to traverse over the WAN by reducing the amount of transmitted data. Data redundancy elimination (DRE), also known as data de-duplication, is a data reduction technique and a derivative of data compression. Data compression reduces the file size by eliminating redundant data contained within an object, while DRE can identify and eliminate both intra-object and inter-object duplicated data elements, such as an entire file and a data block, to reduce the amount of data to be transferred or stored. When multiple instances of the same data element are detected, only one single copy of the data element is transferred or stored. The redundant data element is replaced with a reference or pointer to the unique data copy.

For example, US 2007/0195815 A21 refers in particular to a method for aggregating network message traffic comprising identifying regenerable information in the message traffic at a sending side, the regenerable information indicative of data content in the message traffic reproducible at a receiving side from information accessible at the receiving side; detecting a plurality of frames by identifying frame boundaries defining a series of wireless messages in the message traffic; computing a traffic type for the wireless data in the frame; selectively invoking a compression operation based on the computed traffic type eliminating, by selective extraction and reduction via the compression operation, the identified regenerable information to reduce the volume and associated bandwidth requirements of remaining message traffic to provide reduced message traffic; and framing the reduced message traffic according to predetermined formatting logic, the formatting logic providing transmission of the remaining reduced message traffic and regeneration of the reproducible data content from the identified regenerable information at the receiving side.

Based on algorithm granularity, DRE algorithms can be classified into three categories: whole file hashing, sub-file hashing, and delta encoding. Traditional DRE operates at the application layer, such as web caching, to eliminate redundant data transfers. With the rapid growth of network traffic in the Internet, DRE techniques operating on individual packets have been deployed based on different chunking and sampling methods. Packet-level redundancy elimination identifies and eliminates redundant chunks across packets. Packet-level redundancy elimination techniques can obtain average bandwidth savings of 15-60% when deployed at access links of the service providers or between routers.

### SUMMARY OF THE INVENTION

In accordance with an embodiment, a method for selective data redundancy elimination includes receiving, at a transmission point, an incoming data packet containing content, wherein the content comprises a content type, determining, at the transmission point, if a length of the data packet is less than a threshold; in case that the data packet is less than the threshold, bypassing the selective redundancy elimination; otherwise performing the following steps: determining, at the transmission point, if the content type matches a selective redundancy elimination type; in case the content type matches the selective redundancy elimination type performing the steps of: determining, at the transmission point, redundant data elements in the data packet, wherein a redundant data element is a data element in the data packet having at least one data element being the same as the redundant data element in the data packet, thereby having at least two same data elements in the data packet; and eliminating, at the transmission point, all same data elements of the at least two same data elements except one of the at least two same data elements and replacing all eliminated data elements of the at least two data elements by a reference to the one data element not being eliminated; in case the content type matches a bypass-elimination type, bypassing, at the transmission point, the selective redundancy elimination.

In accordance with another embodiment, a network component configured for selective data redundancy elimination includes a processor and a computer readable storage medium storing programming for execution by the processor, the programming including instructions to perform the above mentioned method.

In accordance with another embodiment, a system for selective data redundancy elimination (SDRE) includes a SDRE manager configured to maintain an end-to-end SDRE list, a packet classifier configured to classify incoming data packets for content type, a packet cache manager configured to store data packets in a packet cache, and an end-to-end SDRE module configured to eliminate a redundant element from a data packet having a content type matching a type for executing a data redundancy elimination (DRE) process, wherein data packets whose content type does not match a type for performing SDRE are forwarded to an end node without executing the DRE process, wherein the system is configured to perform the above mentioned method.

### BRIEF DESCRIPTION OF THE DRAWINGS

For a more complete understanding of the present invention, and the advantages thereof, reference is now made to the following descriptions taken in conjunction with the accompanying drawing, in which:
Figure 1 illustrates a network for communicating data;
Figure 2 illustrates an embodiment of an SDRE manager;
Figure 3 illustrates a selective data redundancy elimination method 300;
Figure 4 is a diagram 400 illustrating bandwidth saving ratios of SDRE over that of DRE for different smartphone traffic traces and for different sizes of packet store caches, ranging from 100 MB to 1 MB; and
Figure 5 is a processing system that can be used to implement various embodiments.

### DETAILED DESCRIPTION OF ILLUSTRATIVE EMBODIMENTS

The making and using of the presently preferred embodiments are discussed in detail below. It should be appreciated, however, that the present invention provides many applicable inventive concepts that can be embodied in a wide variety of specific contexts. The specific embodiments discussed are merely illustrative of specific ways to make and use the invention, and do not limit the scope of the invention.

Data redundancy elimination (DRE) reduces the data to be transferred or stored by identifying and eliminating both intra-object and inter-object duplicated data elements. Deploying DRE at the end hosts maximizes the bandwidth savings, because the amount of content sent to the destination hosts is minimized. However, standard DRE used to identify redundant content chunks is quite expensive in terms of memory and processing capability, especially on resource-constrained hosts. By analyzing the web application traffic traces, it has been determined that some types of content have more redundant content than other types, e.g., texts have more redundant data elements than videos because videos generally are stored in compressed formats and almost do not exhibit redundant data blocks within one video. Thus, it is possible to apply DRE selectively and opportunistically on the content with more redundant data elements than on other content types to save the memory and processing resources at the hosts.

An embodiment provides content-type based selective DRE (SDRE), which deploys DRE selectively on the contents that have the most opportunities for redundant content identification. An embodiment SDRE achieves almost the same bandwidth savings as standard DRE but with less computation resources and improved memory utilization. The reduction in bandwidth savings generally is because SDRE does not identify the redundant content across all of the contents transferred from the source to the destination.

An embodiment provides content-type based selective data redundancy elimination (SDRE), which deploys DRE selectively on the contents which have the most opportunities for redundant content identification, for resource-constrained hosts to save computation and memory resources. An embodiment reduces data transmission for WAN applications, and uses less computing power and memory with about the same performance. Embodiments may be applied to WAN systems and devices, such as WAN optimization controllers, and application delivery controllers.

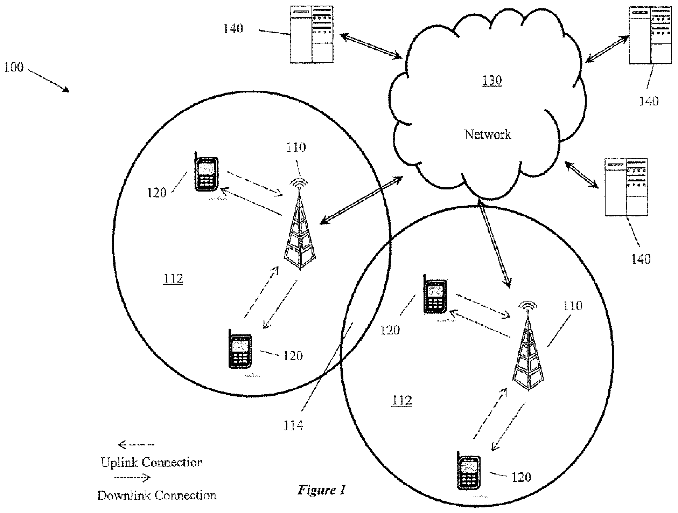

FIG. 1 illustrates a network 100 for communicating data. The network 100 comprises a plurality of access points (APs) 110 each having a coverage area 112, a plurality of user equipment (UEs) 120, a network 130, and a plurality of source nodes 140. As used herein, the term AP may also be referred to as a transmission point (TP), a base station (BS), or a base transceiver station (BTS), and the terms may be used interchangeably throughout this disclosure. These coverage areas 112 represent the range of each AP 110 to adequately transmit data, and the coverage areas of adjacent APs 110 may have some overlap 114 in order to accommodate handoffs between APs 110 whenever a UE 120 exits one coverage area 112 and enters an adjacent coverage area 112. The AP 110 may comprise any component capable of providing wireless access by, inter alia, establishing uplink (dashed line) and/or downlink (dotted line) connections with the UEs 120, such as a base transceiver station (BTS), an enhanced base station (eNB), a femtocell, and other wirelessly enabled devices. The UEs 120 may comprise any component capable of establishing a wireless connection with the AP 110. For example, the UE 120 may be a smartphone, a laptop computer, a tablet computer, a wireless telephone, etc. The UEs 120 may also be referred to as wireless devices, mobile devices, or wireless mobile devices. The network 130 may include a backhaul network, the Internet, an intranet, a wide area network (WAN), and/or a local area network (LAN). The network 130 may be any component or collection of components that allow data to be exchanged between the AP 110 and source nodes 140. In some embodiments, the network 100 may comprise various other wireless devices, such as relays, femtocells, etc. The source nodes 140 may provide content (e.g., text, pictures, audio, video, applications) to the UEs 120.

The APs 110 may forward data packets received from source nodes 140 to appropriate ones of the UEs 120 (e.g., destination nodes). The data packets may comprise video, audio, text, pictures, images, applications, or control packets. The APs 110 may analyze the data packets and determine the type of content. Based on the type of content, the APs 110 may perform a DRE on the content or may pass the content on to the UEs 120 without performing DRE if the content is of a type that is unlikely to have redundancy. For example, video, audio and images are unlikely to include redundant data. Therefore, these data packets may be forwarded on to the appropriate UE 120 without performing DRE, thereby reducing the processing costs on the AP 110. Other data packets (e.g., data packets containing text) may be likely to contain redundant data and the DRE may be performed on these data packets thereby reducing the traffic and improving bandwidth. Thus, the AP 110 may perform selective DRE (SDRE).

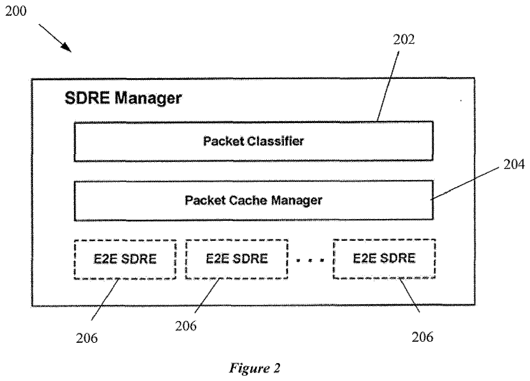

SDRE generally is a packet-level content-type based end-to-end data redundancy elimination technique, which deploys DRE selectively on the contents that have the most opportunities for redundant content identification. Figure 2 illustrates an embodiment of an SDRE manager 200. SDRE manager 200 may be implemented in any of the APs 110 depicted in Figure 1. As shown in Figure 2, SDRE manager 200 comprises a packet classifier 202, a DRE packet cache manager 204, and multiple end-to-end SDRE modules 206, which are created and terminated dynamically according to the end-to-end traffic.

The packet classifier 202 maintains a content-type table according to the TCP flow tuples, consisting of the source IP address, the source port, the destination IP address, and the destination port. For any content transferred from the source to the destination over a TCP connection for web applications, an HTTP header should be transmitted ahead of the content delivery. Thus, the packet classifier 202 can categorize the content-type of the following content packets by identifying the "CONTENT-TYPE" HTTP field in the HTTP header.

A DRE packet cache manager 204 is another component in an end-to-end DRE technique, useful for resource constrained hosts because a content source connects to many end users and an end-user connects to multiple content sources simultaneously, while the size of the packet cache used for redundancy elimination is limited. A packet cache management algorithm improves the effectiveness of DRE techniques. The packet cache can be shared evenly among all host-to-host connections, but this might reduce the utilization of the packet cache and effectiveness of DRE because some host-to-host connections may transfer more content than others. Hence, traffic volume based packet cache assignment can be a more effective method for end-to-end DRE techniques than connection based cache assignment.

SDRE modules are the components that eliminate the redundant elements from the packets. The starts and terminations of SDRE modules are controlled by the SDRE manager, which maintains an end-to-end SDRE list. When a new source IP address is detected by the SDRE manager, a new record will be inserted into the end-to-end SDRE list. When a source has completed all the content transmission, the SDRE manager will remove its record from the end-to-end SDRE list.

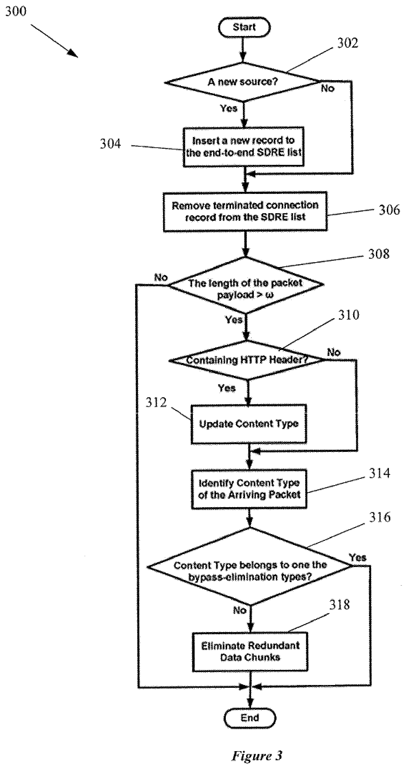

Figure 3 illustrates a selective data redundancy elimination method 300. The method 300 may begin at block 302, where, when a new packet arrives, the SDRE manager checks its source IP address first against the end-to-end SDRE list. If, at block 302, there is no matched record (e.g., the data packet if from a new source), a new record is inserted into the end-to-end SDRE list. At the same time, if the content type belongs to one of the bypass redundancy elimination types, a new end-to-end SDRE module is created, and some space in the packet cache is assigned to it. Otherwise, the end-to-end SDRE module is not created and the DRE packet cache is not assigned for this source-to-destination connection until one packet, which contains the payload that does not belong to all of the bypass redundancy elimination types, has been received by the end user. Then, at block 306, the terminated source-to-destination connections are checked and removed from the list.

If, at block 308, the length of the packet payload is smaller than the size of the Rabin sliding window, it bypasses the redundancy elimination procedure; otherwise, it is passed to one of the SDRE module according to its source IP address. For every arriving packet that is passed to the SDRE module, at block 310, it is determine whether the packet contains an HTTP header and it is classified as an HTTP header packet if it contains a completed or partial HTTP header; otherwise, it is classified as an HTTP content packet. If at block 310, the packet contains an HTTP header packet, the method 300 proceeds to block 312 where the HTTP field "CONTENT-TYPE" is filtered out and its field value is used for packet content classification. AT block 314, the content type of the arriving packet is identifies. If, at block 316, the content type of the arriving packet belongs to one of the SDRE elimination types, it bypasses the redundancy elimination; otherwise, redundant data elements in the arriving packet are identified and eliminated against the DRE packet cache at block 318, after which, the method 300 may end.

The benefits of deploying SDRE on smartphone traffic traces were investigated. First, seven smartphone 3G traffic traces were collected from seven persons and used for SDRE evaluation. Each person used the person's smartphone to access the Internet as normal, and the web application traffic was recorded to a file automatically. Web application traffic of at least seven days was recorded for each person.

The major part of web traffic generally is text, image, video, audio, and applications. There also are some other types of content used in the web applications, such as message, model and multipart, but they generally only compose a very small part of the whole web traffic. The traffic breakdown based on the content-type for these seven traffic traces is shown in Table I below:

**TABLE I: Smartphone Traffic Trace Breakdown**

| Trace | Volume | Text | Image | Video | Audio | Appl. |
|---|---|---|---|---|---|---|
| 1 | 39-7 MB | 19% | 10% | 39% | 0 | 32% |
| 2 | 23-7 MB | 38% | 19% | 0 | 0 | 43% |
| 3 | 61.9 MB | 23% | 9% | 0 | 42% | 26% |
| 4 | 24.4 MB | 29% | 35% | 10% | 0 | 26% |
| 5 | 24.4 MB | 33% | 16% | 7% | 0 | 44% |
| 6 | 27.9 MB | 34% | 27% | 0% | 0 | 39% |
| 7 | 52.7 MB | 21% | 25% | 3% | 0 | 51% |

The total volumes recorded for these seven persons range from 20 to 60 MB. In these seven traffic traces, the text, image and application types of content make up 19%-38%, 9%-35% and 26%-51% of the total volume, respectively. Among these seven persons, only one of them (trace 1) used that person's smartphone to watch substantial video content. The video content made up of 39% of the total volume for this trace record. The other six persons rarely used their respective smartphone to watch videos on the Internet. Only one person listened to some audio content (trace 3), which occupied 42% of that person's total traffic volume, and no other persons downloaded any audio contents in these seven traces.

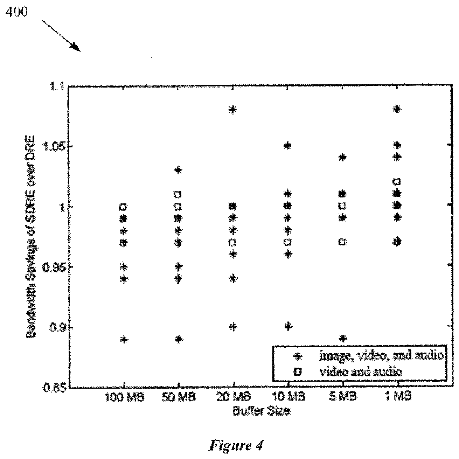

Figure 4 is a diagram 400 illustrating bandwidth saving ratios of SDRE over that of DRE for different smartphone traffic traces and for different sizes of packet store caches, ranging from 100 MB to 1 MB. The MODP fingerprint calculation algorithm and the maximum matching mechanism are deployed in this evaluation. The sliding window size is set to 32 bytes generally to maximize the effectiveness of DRE. Each point represents the bandwidth saving ratio of the SDRE over that of DRE for one traffic trace with some size of packet cache.

Connection-based packet cache management is used in this evaluation. Two bypass DRE content-type scenarios are evaluated. One includes videos and audios, and the other bypass DRE content-type set includes images, videos, and audios. The images, videos and audios are stored in compressed formats in general due to the relatively large original sizes of images, videos and audios compared to text files. Thus, redundancy within this compressed content, such as images, videos and audio, is quite limited; this provides opportunities to reduce the computation overhead of DRE algorithms while achieving almost the same DRE effectiveness. With enough packet caches, the bandwidth saving ratio of SDRE over that of DRE represents how much redundancy is contributed by the bypassed DRE content types. In this case, a 100 MB packet cache is large enough to remove all the redundant data chunks that can be identified by the DRE techniques. From the results with the 100 MB packet cache, all the ratios are smaller than 1 because only parts of packets are checked for redundant data chunks, but more than 90% of the redundant data chunks can be identified by SDRE. This result generally verifies that redundancy within images, videos and audio is quite limited.

With the decrease of the DRE packet cache, SDRE achieves more bandwidth savings than that of standard DRE. Because the content with more redundant data chunks stays in the DRE packet cache longer and is not refreshed by the content with less redundancy, the effectiveness of the packet cache for redundant data identification can be improved. Among all of these seven smartphone traces, about 19%-51% and 3%-42% of traffic processed for redundant data identifications can be reduced by setting up the DRE bypass content types with {images, video, audio} and {videos, audio}, respectively. The results in Figure 3 show that SDRE can achieve almost the same bandwidth savings as that of standard DRE with less computation and smaller memory.

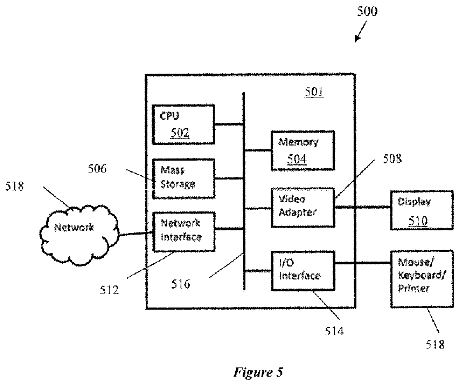

Figure 5 is a block diagram of a processing system 500 that may be used for implementing the devices and methods disclosed herein. Specific devices may utilize all of the components shown, or only a subset of the components and levels of integration may vary from device to device. Furthermore, a device may contain multiple instances of a component, such as multiple processing units, processors, memories, transmitters, receivers, etc. The processing system 500 may comprise a processing unit 501 equipped with one or more input/output devices, such as a speaker, microphone, mouse, touchscreen, keypad, keyboard, printer, display, and the like. The processing unit may include a central processing unit (CPU) 502, memory 504, a mass storage device 506, a video adapter 508, a network interface 512, and an I/O interface 514 connected to a bus 516.

The bus 516 may be one or more of any type of several bus architectures including a memory bus or memory controller, a peripheral bus, video bus, or the like. The CPU 502 may comprise any type of electronic data processor. The memory 504 may comprise any type of system memory such as static random access memory (SRAM), dynamic random access memory (DRAM), synchronous DRAM (SDRAM), read-only memory (ROM), a combination thereof, or the like. In an embodiment, the memory 504 may include ROM for use at boot-up, and DRAM for program and data storage for use while executing programs.

The mass storage device 506 may comprise any type of storage device configured to store data, programs, and other information and to make the data, programs, and other information accessible via the bus 516. The mass storage device 506 may comprise, for example, one or more of a solid state drive, hard disk drive, a magnetic disk drive, an optical disk drive, or the like.

The video adapter 508 and the I/O interface 514 provide interfaces to couple external input and output devices to the processing unit. As illustrated, examples of input and output devices include the display 510 coupled to the video adapter 508 and the mouse/keyboard/printer 518 coupled to the I/O interface 514. Other devices may be coupled to the processing unit 501 and additional or fewer interface cards may be utilized. For example, a serial interface card (not shown) may be used to provide a serial interface for a printer.

The processing unit also includes one or more network interfaces 512, which may comprise wired links, such as an Ethernet cable or the like, and/or wireless links to access nodes or different networks. The network interface 512 allows the processing unit to communicate with remote units via the networks 518. For example, the network interface 512 may provide wireless communication via one or more transmitters/transmit antennas and one or more receivers/receive antennas. In an embodiment, the processing unit 501 is coupled to a local-area network or a wide-area network for data processing and communications with remote devices, such as other processing units, the Internet, remote storage facilities, or the like.

Although the description has been described in detail, it should be understood that various changes, substitutions and alterations can be made without departing from the scope of this disclosure as defined by the appended claims. Moreover, the scope of the disclosure is not intended to be limited to the particular embodiments described herein, as one of ordinary skill in the art will readily appreciate from this disclosure that processes, machines, manufacture, compositions of matter, means, methods, or steps, presently existing or later to be developed, may perform substantially the same function or achieve substantially the same result as the corresponding embodiments described herein. Accordingly, the appended claims are intended to include within their scope such processes, machines, manufacture, compositions of matter, means, methods, or steps.

## Claims

1. A method for selective redundancy elimination, the method comprising:
receiving, at a transmission point, an incoming data packet containing content, wherein the content comprises a content type;
determining, at the transmission point, if a length of the data packet is less than a threshold (step 308);
in case that the data packet is less than the threshold, by passing redundancy elimination;
otherwise performing the following steps:
determining, at the transmission point, if the content type matches a selective redundancy elimination type (step 316);
in case the content type matches the selective redundancy elimination type performing redundancy elimination by the steps of:
determining, at the transmission point, redundant data elements in the data packet, wherein a redundant data element is a data element in the data packet having at least one data element being the same as the redundant data element in the data packet, thereby having at least two same data elements in the data packet; and
eliminating, at the transmission point, all same data elements of the at least two same data elements except one of the at least two same data elements and replacing all eliminated data elements of the at least two data elements by a reference to the one data element not being eliminated;
in case the content type matches a bypass-elimination type, bypassing, at the transmission point, the redundancy elimination.

2. The method of claim 1, wherein a size of the threshold is equal to a size of a Rabin sliding window.

3. The method of claim 1, wherein the content type is identified from a hypertext transfer protocol, HTTP, header in the data packet.

4. The method of claim 1, wherein the bypass-elimination type comprises at least one of an image, video, and audio.

5. The method of claim 1, wherein the selective redundancy elimination type comprises at least one of text and application.

6. The method of claim 1, maintaining a packet classifier, wherein the packet classifier maintains a content-type table according to transfer control protocol flow tuples.

7. The method of claim 6, wherein the content-type table comprises at least one of a source internet protocol, IP, address, a source port, a destination IP address, and a destination port.

8. A network component (500) configured for selective data redundancy elimination, comprising:
a processor (502); and
a computer readable storage medium (504) storing programming for execution by the processor, the programming including instructions to perform the method according to claim 1.

9. The network component of claim 8, wherein the programming further comprises instructions to bypass selective redundancy elimination when the length of the data packet is less than a threshold.

10. The network component of claim 8, wherein the content type is identified from a hypertext transfer protocol, HTTP, header in the data packet.

11. The network component of claim 8, wherein the programming further includes instructions to maintain a packet classifier, wherein the packet classifier maintains a content-type table according to transfer control protocol flow tuples.

12. The network component of claim 11, wherein the content-type table comprises at least one of a source internet protocol, IP, address, a source port, a destination IP address, and a destination port.

13. A system for selective data redundancy elimination, SDRE, comprising:
a SDRE manager (200) configured to maintain an end-to-end SDRE list;
a packet classifier (202) configured to classify incoming data packets for content type;
a packet cache manager (204) configured to store data packets in a packet cache; and
an end-to-end SDRE module (206) configured to eliminate a redundant element from a data packet having a content type matching a type for executing a data redundancy elimination, DRE, process,
wherein data packets whose content type does not match a type for performing SDRE are forwarded to an end node without executing the DRE process, wherein the system is configured to perform any of the method of claims 1 - 7.

14. The system of claim 13, wherein the SDRE manager is configured to insert a new record into the end-to-end SDRE list when a new source internet protocol (IP) address is detected and to remove a record from the end-to-end SDRE list when a source has completed all of the source's content transmission.

## Patentansprüche

1. Verfahren für selektive Redundanzbeseitigung, wobei das Verfahren Folgendes umfasst:
Empfangen, an einem Übertragungspunkt, eines eingehenden Datenpakets, das Inhalt enthält, wobei der Inhalt einen Inhaltstyp umfasst;
Bestimmen, an dem Übertragungspunkt, ob eine Länge des Datenpakets kleiner ist als ein Schwellenwert (Schritt 308);
im Fall, dass das Datenpaket kleiner ist als der Schwellenwert, Umgehen der Redundanzbeseitigung;
anderenfalls Durchführen der folgenden Schritte:
Bestimmen, an dem Übertragungspunkt, ob der Inhaltstyp einem Typ der selektiven Redundanzbeseitigung entspricht (Schritt 316);
im Fall, dass der Inhaltstyp dem Typ der selektiven Redundanzbeseitigung entspricht, Durchführen der Redundanzbeseitigung durch die folgenden Schritte:
Bestimmen, an dem Übertragungspunkt, von redundanten Datenelementen in dem Datenpaket, wobei ein redundantes Datenelement ein Datenelement in dem Datenpaket ist, das mindestens ein Datenelement aufweist, das das gleiche ist wie das redundante Datenelement in dem Datenpaket, wodurch mindestens zwei gleiche Datenelemente in dem Datenpaket vorhanden sind; und
Beseitigen, an dem Übertragungspunkt, aller gleichen Datenelemente der mindestens zwei gleichen Datenelemente außer einem der mindestens zwei gleichen Datenelemente und Ersetzen aller beseitigten Datenelemente der mindestens zwei Datenelemente durch einen Verweis auf das eine Datenelement, das nicht beseitigt wird;
im Fall, dass der Inhaltstyp einem Umgehung-Beseitigungstyp entspricht, Umgehen, an dem Übertragungspunkt, der Redundanzbeseitigung.

2. Verfahren nach Anspruch 1, wobei eine Größe des Schwellenwerts gleich einer Größe eines Rabin-Gleitfensters ist.

3. Verfahren nach Anspruch 1, wobei der Inhaltstyp aus einem Hypertextübertragungsprotokoll- bzw. HTTP-Kopf in dem Datenpaket identifiziert wird.

4. Verfahren nach Anspruch 1, wobei der Umgehung-Beseitigungstyp mindestens eines eines Bilds, Videos oder Audios umfasst.

5. Verfahren nach Anspruch 1, wobei der Typ der selektiven Redundanzbeseitigung mindestens eines von Text und Anwendung umfasst.

6. Verfahren nach Anspruch 1, Führen einer Paket-Klassifizierungsvorrichtung, wobei die Paket-Klassifizierungsvorrichtung eine Inhaltstyp-Tabelle gemäß Übertragungssteuerungsprotokoll-Flusstupeln führt.

7. Verfahren nach Anspruch 6, wobei die Inhaltstyp-Tabelle mindestens eines einer Quellen-Internetprotokoll- bzw. -IP-Adresse, eines Quellenanschlusses, einer Ziel-IP-Adresse und eines Zielanschlusses umfasst.

8. Netzwerkkomponente (500), konfiguriert für selektive Datenredundanzbeseitigung, umfassend:
einen Prozessor (502); und
ein computerlesbares Speichermedium (504), das Programmierung zur Ausführung durch den Prozessor speichert, wobei die Programmierung Anweisungen zum Durchführen des Verfahrens nach Anspruch 1 enthält.

9. Netzwerkkomponente nach Anspruch 8, wobei die Programmierung ferner Anweisungen zum Umgehen der selektiven Redundanzbeseitigung, wenn die Länge des Datenpakets kleiner ist als ein Schwellenwert, umfasst.

10. Netzwerkkomponente nach Anspruch 8, wobei der Inhaltstyp aus einem Hypertextübertragungsprotokoll- bzw. HTTP-Kopf in dem Datenpaket identifiziert wird.

11. Netzwerkkomponente nach Anspruch 8, wobei die Programmierung ferner Anweisungen zum Führen einer Paket-Klassifizierungsvorrichtung enthält, wobei die Paket-Klassifizierungsvorrichtung eine Inhaltstyp-Tabelle gemäß Übertragungssteuerungsprotokoll-Flusstupeln führt.

12. Netzwerkkomponente nach Anspruch 11, wobei die Inhaltstyp-Tabelle mindestens eines einer Quellen-Internetprotokoll- bzw. -IP-Adresse, eines Quellenanschlusses, einer Ziel-IP-Adresse und eines Zielanschlusses umfasst.

13. System für selektive Datenredundanzbeseitigung, SDRE, umfassend:
eine SDRE-Verwaltungsvorrichtung (200), konfiguriert zum Führen einer Ende-zu-Ende-SDRE-Liste;
eine Paket-Klassifizierungsvorrichtung (202), konfiguriert zum Klassifizieren von eingehenden Datenpaketen nach Inhaltstyp;
eine Paketzwischenspeicher-Verwaltungsvorrichtung (204), konfiguriert zum Speichern von Datenpaketen in einem Paketzwischenspeicher; und
ein Ende-zu-Ende-SDRE-Modul (206), konfiguriert zum Beseitigen eines redundanten Elements aus einem Datenpaket mit einem Inhaltstyp entsprechend einem Typ zum Ausführen eines Datenredundanzbeseitigungs- bzw. DRE-Prozesses, wobei Datenpakete, deren Inhaltstyp nicht einem Typ zum Durchführen von SDRE entspricht, an einen Endknoten weitergeleitet werden, ohne den DRE-Prozess auszuführen, wobei das System konfiguriert ist, das Verfahren nach einem beliebigen der Ansprüche 1-7 durchzuführen.

14. System nach Anspruch 13, wobei die SDRE-Verwaltungsvorrichtung konfiguriert ist, eine neue Aufzeichnung in die Ende-zu-Ende-SDRE-Liste einzufügen, wenn eine neue Quellen-Internetprotokoll- bzw. -IP-Adresse detektiert wird, und eine Aufzeichnung aus der Ende-zu-Ende-SDRE-Liste zu entfernen, wenn eine Quelle sämtliche Übertragung des Inhalts der Quelle fertiggestellt hat.

## Revendications

1. Procédé d'élimination sélective des redondances, le procédé comprenant les étapes suivantes :
recevoir, au niveau d'un point de transmission, un paquet de données entrant contenant un contenu, où le contenu comprend un type de contenu ;
déterminer, au niveau du point de transmission, si une longueur du paquet de données est inférieure à un seuil (étape 308) ;
dans le cas où le paquet de données est plus petit que le seuil, contourner l'élimination des redondances ;
sinon, exécuter les étapes suivantes :
déterminer, au niveau du point de transmission, si le type de contenu correspond à un type d'élimination sélective des redondances (étape 316) ;
dans le cas où le type de contenu correspond au type d'élimination sélective des redondances, procéder à une élimination des redondances en exécutant les étapes suivantes :
déterminer, au niveau du point de transmission, les éléments de données redondants dans le paquet de données, un élément de données redondant étant un élément de données dans le paquet de données ayant au moins un élément de données étant le même que l'élément de données redondant dans le paquet de données, conduisant ainsi à ce qu'il y ait au moins deux éléments de données identiques dans le paquet de données ; et
éliminer, au niveau du point de transmission, tous les éléments de données identiques des au moins deux éléments de données identiques à l'exception d'un des au moins deux éléments de données identiques, et remplacer tous les éléments de données éliminés des au moins deux éléments de données par une référence à l'élément de données n'étant pas éliminé ;
dans le cas où le type de contenu correspond à un type à élimination par contournement, contourner, au niveau du point de transmission, l'élimination des redondances.

2. Procédé selon la revendication 1, dans lequel une taille du seuil est égale à une taille d'une fenêtre coulissante de Rabin.

3. Procédé selon la revendication 1, dans lequel le type de contenu est identifié à partir d'un en-tête de protocole de transfert hypertexte, HTTP, dans le paquet de données.

4. Procédé selon la revendication 1, dans lequel le type à élimination par contournement comprend au moins un type de contenu parmi du contenu d'image, du contenu vidéo et du contenu audio.

5. Procédé selon la revendication 1, dans lequel le type d'élimination sélective des redondances comprend au moins un type parmi du texte et une application.

6. Procédé selon la revendication 1, maintenant un classificateur de paquet, le classificateur de paquet maintenant une table de types de contenus suivant des uplets de flux de protocole de contrôle de transfert.

7. Procédé selon la revendication 6, dans lequel la table de types de contenus comprend au moins un élément parmi : une adresse de protocole Internet, IP, source, un port source, une adresse IP de destination et un port de destination.

8. Composant de réseau (500) configuré pour une élimination sélective des redondances de données, comprenant :
un processeur (502) ; et
un support de stockage lisible par ordinateur (504) stockant des programmes pour une exécution par le processeur, les programmes comprenant des instructions pour exécuter le procédé selon la revendication 1.

9. Composant de réseau selon la revendication 8, dans lequel la programmation comprend en outre des instructions pour contourner l'élimination sélective des redondances lorsque la longueur du paquet de données est inférieure à un seuil.

10. Composant de réseau selon la revendication 8, dans lequel le type de contenu est identifié à partir d'un en-tête de protocole de transfert hypertexte, HTTP, dans le paquet de données.

11. Composant de réseau selon la revendication 8, dans lequel les programmes comprennent en outre des instructions pour maintenir un classificateur de paquet, le classificateur de paquet maintenant une table de types de contenus suivant des uplets de flux de protocole de contrôle de transfert.

12. Composant de réseau selon la revendication 11, dans lequel la table de types de contenus comprend au moins un élément parmi : une adresse de protocole Internet, IP, source, un port source, une adresse IP de destination et un port de destination.

13. Système d'élimination sélective des redondances de données, SDRE, comprenant :
un gestionnaire SDRE (200) configuré pour maintenir une liste SRDE de bout en bout ;
un classificateur de données (202) configuré pour classifier des paquets de données entrants en fonction de leur type de contenu ;
un gestionnaire de cache de paquet (204) configuré pour stocker des paquets de données dans un cache de paquets ; et
un module SDRE de bout en bout (206), configuré pour éliminer un élément redondant d'un paquet de données ayant un type de contenu correspondant à un type pour exécuter un processus d'élimination des redondances de données, DRE,
les paquets de données dont le type de contenu ne correspond pas à un type pour exécuter une SDRE étant transmis à un noeud d'extrémité sans exécuter le processus DRE, le système étant configuré pour exécuter n'importe quel procédé des revendications 1 à 7.

14. Système selon la revendication 13, dans lequel le gestionnaire SDRE est configuré pour insérer un nouvel enregistrement dans la liste SDRE de bout en bout lorsqu'une nouvelle adresse de protocole Internet, IP, source est détectée et pour supprimer un enregistrement de la liste SDRE de bout en bout lorsqu'une source a terminé l'ensemble de la transmission de contenu de la source.
